# EUROPEAN PATENT APPLICATION

(11) **EP 1 143 734 A2**
(43) Date of publication of application: **10.10.2001**
(21) Application number: 01660056.1
(22) Date of filing: 27.03.2001
(51) Int. Cl.: H04N 7/173

(54) **Frequency range implementation in a digital video broadcasting system**

(30) Priority: 03.04.2000 FI 20000774
(71) Applicant: Nokia Multimedia Terminals Oy, 20521 Turku (FI)
(72) Inventor: Kangas, Mauri, 21530 Paimio (FI)
(74) Representative: Brax, Matti Juhani

(57) **Abstract**

The invention relates to an arrangement for selecting frequency ranges to be used in return and forward interaction paths in an interaction channel of a digital video broadcasting system. The arrangement comprises first filtering means for filtering signals in the forward interaction path, second filtering means for filtering signals in the return interaction path and means for selecting sub-frequency ranges to be used in the forward interaction path and in the return interaction path from a number of predetermined sub-frequency ranges arranged into the first filtering means and into the second filtering means. The invention also relates to a method for arranging frequency ranges into a forward interaction path and into a return interaction path in a digital video broadcasting system.

## Description

### BACKGROUND OF THE INVENTION

### 1. Field of the Invention

The invention relates to frequency range implementation in a digital video broadcasting system. More closely the invention relates to an arrangement to select the frequency ranges to be used in a convenient manner in a digital video broadcasting system.

### 2. General Description

Digital video broadcasting systems are coming to buyer's market at the priority date of the present patent application. In digital video broadcasting systems the data is transferred from service providers to users digitally, which brings different kinds of services available to everybody. The digital video broadcasting system enables interactive services to the users. The user can, for example, select, which programs he or she wants to watch and even when, in which case the programs are delivered to the user whenever he or she wants.

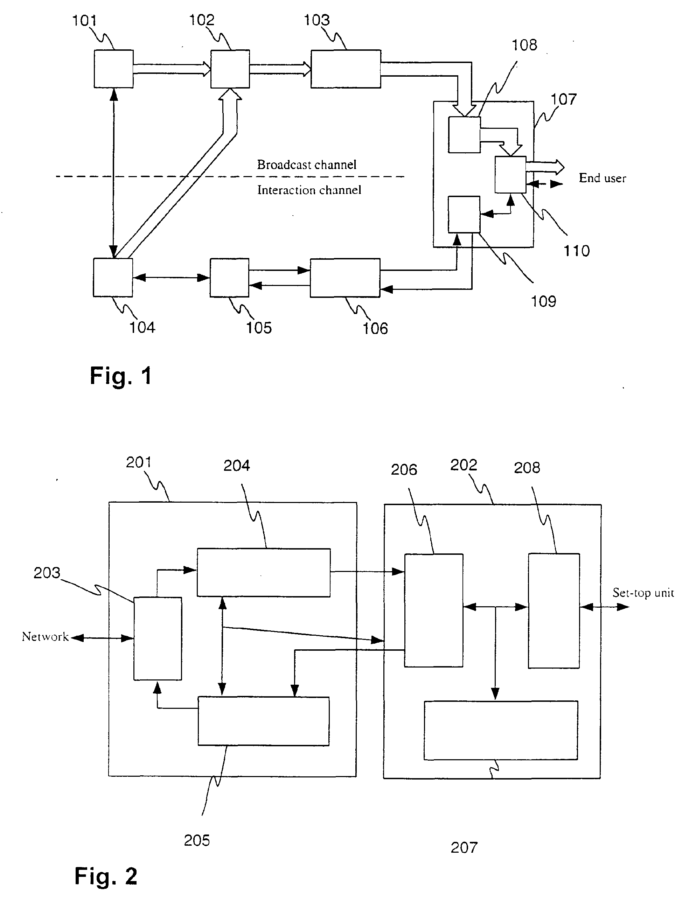

In Figure 1 it is shown a system model of the digital video broadcasting system. The system comprises two channels between a user and a service provider. The first channel is a unidirectional broadband broadcast channel, which is used for delivering video, audio and data. The other channel is a so called interaction channel, which is used for interaction purposes. The interaction channel is a bi-directional channel between a user and a service provider. The interaction channel is formed by two paths the first of which is so called forward interaction path (downstream channel) and the second of which is so called return interaction path (upstream channel). The forward interaction path is from the service provider to the user. It is used for providing information from the service provider to the user. The forward interaction path can also be embedded into the broadcast channel because the direction of data transmission is the same. The return interaction path is from the user to the service provider. It is used for making requests to the service provider or for answering the questions set by the service provider.

The system model shown in Figure 1 comprises different entities for broadcast channel and interaction channel. In the broadcast channel the entity, which produces the services, is a broadcast service provider 101. The service is delivered to the user through a broadcast network adapter 102 and a broadcast delivery media 103. The broadcast network adapter 102 is arranged to change the data format compatible for transmission through broadcast delivery media 103. The first entity in the interaction channel is an interactive service provider 104. The interactive service provider 104 provides the services the user can use. The interactive service provider 104 can be the same as the broadcast service provider 102 or different. When the broadcast service provider 102 is different than interactive service provider 104, there must exist some sort of coordination between these two entities. The interaction channel comprises also an interactive network adapter 105 and interaction network 106. These enable the bi-directional data transmission between the interactive service provider 104 and the user. The signals from the broadcast and interaction channels are transmitted to a user terminal 107, which is called a set-top box. The user terminal comprises a broadcast interface module 108, interactive interface module 109 and a set-top unit 110. The interface modules form interfaces between the channels and the user terminal 107. The set-top unit 110 provides the user interface between the user and the digital video broadcast system.

In the interaction channel the data transmission is bi-directional. This means that the data transmitted to different directions must be separated somehow. One typical way is to use different frequency ranges. The frequency modulation is carried out in the interactive interface module 109. One possible implementation of the interactive interface module 109 is shown in Figure 2. The interactive interface module 109 consists of two modules. The first module is so called radio frequency module 201, which contains all the RF elements of the interactive interface module 109. The second module is so called digital module 202, which is used for data processing purposes in the interactive interface module 109.

The radio frequency module 201 is connected to the network. The first block 203, which is used for combining and separating the downstream and upstream channels, is some sort of filter. The most used is a so called diplex filter. The downstream signal is forwarded to the second block 204, which typically comprises means for selecting the downstream channel. The selection is done by setting a correct filter in use. The second block also comprises means for demodulating the downstream signal compatible for the digital module 202. The upstream signal coming from the digital module 202 to the radio frequency module 201 is modulated and up-converted to the upstream frequency range in block 205. The upstream signal is fed to the network through the filtering means.

The digital module 202 contains means for processing the digital signal. The means needed for these purposes are for example microprocessor 208, memory means 207 and coding and decoding means 206. The set-top box interface is connected to the microprocessor 208.

Between the modules in the radio frequency module 201 and in the digital module 202 it is arranged a signaling. The signaling is mostly for controlling purposes so that the modules operate in a correct way and order.

The frequency ranges used in the forward interaction path and in the return interaction path are determined so that they can be used efficiently and without disturbing each other. It must be pointed out that the forward interaction path frequency range for signaling purposes is out of the band from the frequencies, which are used for data transmission. The frequency range of the forward interaction path used for signaling is specified to be 70 to 130 MHz and/or 300 to 862 MHz. These frequency ranges are recommended, but they are not mandatory. Correspondingly, for the return interaction path the recommended frequency range is specified to be 5 to 65 MHz.

Though, the specified frequency ranges are determined in a way that the user terminal can fulfill the specifications for the forward interaction path and for the return interaction path without completely covering the whole frequency ranges, the interactive service providers 104 have different requirements for the frequency ranges. As a result, the manufacturer of the user terminal must have several versions of products to fulfill all cases. This increases the manufacturing costs and makes the production more difficult to be carried out.

It is technically very difficult and expensive to have all frequency ranges completely covered in the same user terminal at the same time. As a result, there must be made compromises in the technical implementation. It is technically feasible to have an implementation, where the starting point of the downstream frequency range is 20 MHz higher than the ending point of the upstream frequency range.

### SUMMARY OF THE INVENTION

The object of the invention is to present an arrangement for arranging the frequency ranges of the upstream frequency and the downstream frequency so that the whole frequency range can be covered with one implementation.

The object of the invention is achieved by arranging a frequency selection mechanism to user devices so that all possible frequency ranges are available in all cases and always separated with a predetermined frequency gap and the frequency ranges are selected with a control signal.

The arrangement for selecting frequency ranges to be used in return and forward interaction paths in an interaction channel of a digital video broadcasting system is characterized by that the arrangement comprises at least
- first filtering means for filtering signals in the forward interaction path,
- second filtering means for filtering signals in the return interaction path,
- means for selecting sub-frequency ranges to be used in said forward interaction path and in said return interaction path from a number of predetermined sub-frequency ranges arranged into said first filtering means and into said second filtering means.

The method for arranging frequency ranges into a forward interaction path and into a return interaction path in a digital video broadcasting system is characterized by that the method comprises at least the following steps:
- a number of possible sub-frequency range pairs, comprising at least one frequency range for the forward interaction path and at least one frequency range for the return interaction path, are determined,
- said sub-frequency range pairs are arranged into an interactive interface module,
- the one of said frequency range pairs to be used in said interactive interface module is selected as a response to a control signal.

According to the invention a frequency selection mechanism comprises a number of possible predetermined frequency ranges for the upstream and downstream channels, which are arranged to a set-top box in the digital video broadcasting system. The frequency ranges are arranged so that the frequency gap between the frequency range of the upstream channel and the frequency range of the downstream channel is wide enough. This is for avoiding the disturbances, which may occur if the frequency ranges are too close to each other. The frequency ranges to be used are selected from the predetermined ranges with a control signal. With the same control signal both the frequency range of the upstream channel and the frequency range of the downstream channel can advantageously be selected.

### BRIEF DESCRIPTION OF THE DRAWINGS

- Figure 1: illustrates a system model of the digital video broadcasting system,
- Figure 2: illustrates one possible implementation of the interactive interface module.
- Figure 3: illustrates a block diagram of one preferred embodiment of the invention,
- Figure 4: illustrates a second block diagram of another preferred embodiment of the invention,
- Figure 5: illustrates a general arrangement of the invention as a block diagram,
- Figure 6: illustrates a method according to the invention.

Same reference numerals are used for similar entities in the figures.

### DETAILED DESCRIPTION OF THE PREFERRED EMBODIMENTS

Figures 1 and 2 are discussed in detail in the part describing the prior art.

According to the invention the frequency ranges in the upstream and downstream channels are divided to different sub-frequency ranges, which are selected with a frequency selector in the user's device. The selector is arranged to operate so that by controlling it predetermined frequency range combinations for the upstream and downstream channels can be chosen. The frequency range combinations are formed so that the frequency gap between the frequency ranges used in the upstream and downstream channels is wide enough. By means of the frequency gap the disturbances between the channels can be minimized.

The specifications for the forward interaction paths discloses that the recommended frequency range is from 70 to 130 MHz and/or from 300 to 862 MHz. Correspondingly, the recommended frequency range for the return interaction path is from 5 to 65 MHz. According to one preferred embodiment of the invention the frequency gap between the upstream frequency ending point and the downstream frequency starting point is 20 MHz.

In the simplest application of the invention it is arranged two possible frequency ranges for the downstream and upstream channels. The frequency ranges are shown in Table 1.

**Table 1.**

| Frequency range selection 1: | |
|---|---|
| Upstream frequency: | 5 - 50 MHz |
| Downstream frequency: | 70 - 130 MHz, 300 - 862 MHz |

| Frequency range selection 2: | |
|---|---|
| Upstream frequency: | 5 - 65 MHz |
| Downstream frequency: | 85 - 130 MHz, 300 - 862 MHz |

In the frequency range selection 1 the upstream frequency range does not cover the whole frequency range determined in the specification. By means of this the downstream frequency range of the specifications is possible to be covered totally.

The frequency range selection 2 is arranged in other way around. Here the upstream frequency range of the specification is covered totally. As a result of this the downstream frequency range is narrower than determined in the specification when the frequency gap between the channels is 20 MHz.

In Table 2 it is shown a more sophisticated range selection mechanism. Here it is arranged three possible frequency range selections.

**Table 2.**

| Frequency range selection 1: | |
|---|---|
| Upstream frequency: | 5 - 45 (or 5 - 50) MHz |
| Downstream frequency: | 70 - 130 MHz, 300 - 862 MHz |

| Frequency range selection 2: | |
|---|---|
| Upstream frequency: | 5 - 55 MHz |
| Downstream frequency: | 75 - 130 MHz, 300 - 862 MHz |

| Frequency range selection 3: | |
|---|---|
| Upstream frequency: | 5 - 65 MHz |
| Downstream frequency: | 85 - 130 MHz, 300 - 862 MHz |

Here the frequency ranges are arranged so that there are three possible selections. The first frequency range selection covers the whole downstream frequency range determined in the specification. The upstream frequency range is narrower than determined in the specification. The second frequency range selection is arranged so that the frequency ranges of the upstream channel and the downstream channel determined in the specification are not fully covered. The frequency gap between the frequency ranges of the upstream and downstream channels is again 20 MHz as can be seen in Table 2. The third frequency range selection is carried out so that the upstream frequency of the specification is covered and the downstream frequency range is narrower than determined in the specification.

To a person skilled in the art it is obvious that the frequency gap between the upstream and downstream channels can be any other than 20 MHz. However, advantageously it is more than 5 MHz. It is also clear that there can be different frequency range selections than shown above. Also, there can be arranged any other number of selections than it was shown in the previous examples. In the most sophisticated embodiment of the invention the frequency range selection can be realized so that it operates dynamically over the whole frequency area of the downstream and the upstream frequency ranges. The control of this dynamic operation can be realized for example with a control circuit.

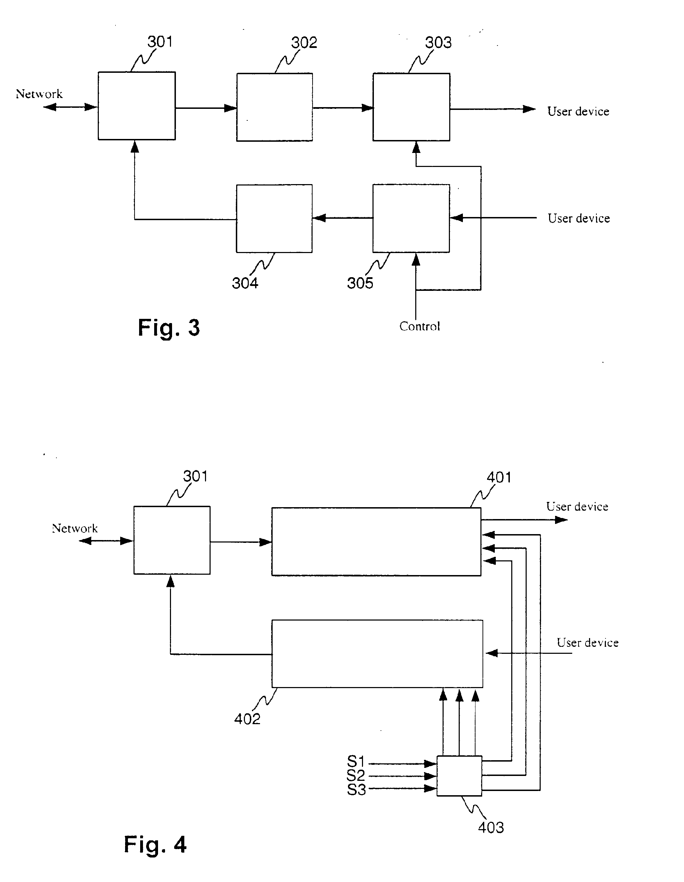

In Figure 3 it is shown a block diagram of one preferred embodiment of the invention. Here it is shown a principal implementation of the case shown in Table 1. The implementation is arranged advantageously into the interactive interface module 109. The implementation comprises means 302, 303, 304, 305 for filtering the upstream and downstream signals. In addition, the implementation comprises means 301 for splitting the downstream and upstream signals. Said means 301 also form the interface to the network.

Let's consider a case where there is signaling to the downstream direction. In this situation means 301 let the signals go to the filtering means 302, 303. The filtering means 302, 303 are arranged so that the first filtering means 302 filter out a first frequency range and the second filtering means filter out a second frequency range, which advantageously differs from the first frequency range. As an example we can consider a situation. where the first and second filtering means 302, 303 are high-pass filters. Advantageously, these are arranged to filter the signal to the downstream frequency range. This means that the first filtering means 302 are arranged to filter out all the frequencies below 70 MHz. With this the first frequency range of the downstream channel can be achieved. The second filtering means 303 are arranged to filter out all the frequencies below 85 MHz. This produces the second frequency range of the downstream channel. By means of control signal the second filtering means 303 can be chosen. With this arrangement the downstream channel can be filtered in correspondence to the frequency range of the downstream channel in use. The filtered signal is fed to the user device.

The upstream channel comprises quite similar arrangement as described above. To the upstream channel it is arranged filtering means by means of which the frequency range of the upstream channel can be achieved. The signals from the user device are fed to the first filtering means 305 in the upstream channel. The filtering means 305 are arranged to filter out a first frequency range. The second filtering means 304 in the upstream channel are arranged to filter out a second frequency range, which advantageously differs from the first frequency range. Advantageously, means 304, 305 are low-pass filters.

Next we consider the operation of an arrangement shown in Figure 3 applied to the case shown in Table 1, where the first upstream frequency range is from 5 to 50 MHz and the second upstream frequency range is from 5 to 65 MHz. In the same way the first downstream frequency range is from 70 to 130 MHZ and from 300 to 862 MHz. The second downstream frequency range is from 85 to 130 MHz and from 300 to 862 MHz. When the first frequency range of the upstream frequency range is selected with the control signal, also the first downstream frequency range is selected automatically to make sure that the frequency gap between the channels is wide enough. In a similar manner the second frequency ranges in the upstream and downstream frequency ranges are selected at the same time.

In Figure 4 it is shown another block diagram of another preferred embodiment of the invention. The arrangement shown in Figure 4 is implemented so that it covers all the frequency range selections shown in Table 2. Into the filtering means 401 of the downstream channel it is arranged three frequency ranges among which the correct frequency range can be selected. The filtering frequencies are according to Table 2 such as 70 MHz, 75 MHz and 85 MHz. The filtering means 401 used are advantageously high-pass filters. In a similar way the filtering is arranged in the upstream channel. The filtering means 402 in the upstream channel are arranged so that all the frequency ranges are possible to achieve by selecting a correct filter. Advantageously, the filtering frequencies in the upstream channel are 50 MHz, 55 MHz and 65 MHz. The filtering means are low-pass filters so that all the frequencies below the filtering frequencies are passed.

For selecting correct filtering means in the upstream and downstream channels at the same time there is arranged a control circuit 403 for controlling the filtering means 401, 402. The control circuit is controlled with frequency gap selector signals S1, S2, S3.

**Table 3.**

| Selector | Downstream Frequency range | High-pass filter | Upstream Frequency range | Low-pass filter |
|---|---|---|---|---|
| S1 | 70 - 130 MHz 300 - 862 MHz | 70 MHz | 5 - 50 MHz | 50 MHz |
| S2 | 75 - 130 MHz 300 - 862 MHz | 75 MHz | 5 - 55 MHz | 55MHz |
| S3 | 85 - 130 MHz 300 - 862 MHz | 85 MHz | 5 - 65 MHz | 65 MHz |

Table 3 represents one possible arrangement for selecting the upstream and downstream frequency ranges by using frequency gap selectors S1, S2, S3. By selecting the frequency ranges with selector S1 the used frequency ranges are 70 - 130 MHz and 300 - 862 MHz for downstream frequencies and 5 - 50 MHz for upstream frequencies. Correspondingly, with selector S2 the used frequency ranges are 75 - 130 MHz and 300 - 862 MHz for downstream frequencies and 5 - 55 MHz for upstream frequencies. With selector S3 the used frequency ranges are 85 - 130 MHz and 300 - 862 MHz for downstream frequencies and 5 - 65 MHz for upstream frequencies. To a person skilled in the art it is obvious that the selectors and the frequency ranges corresponding to these selectors can be chosen any other way than shown here.

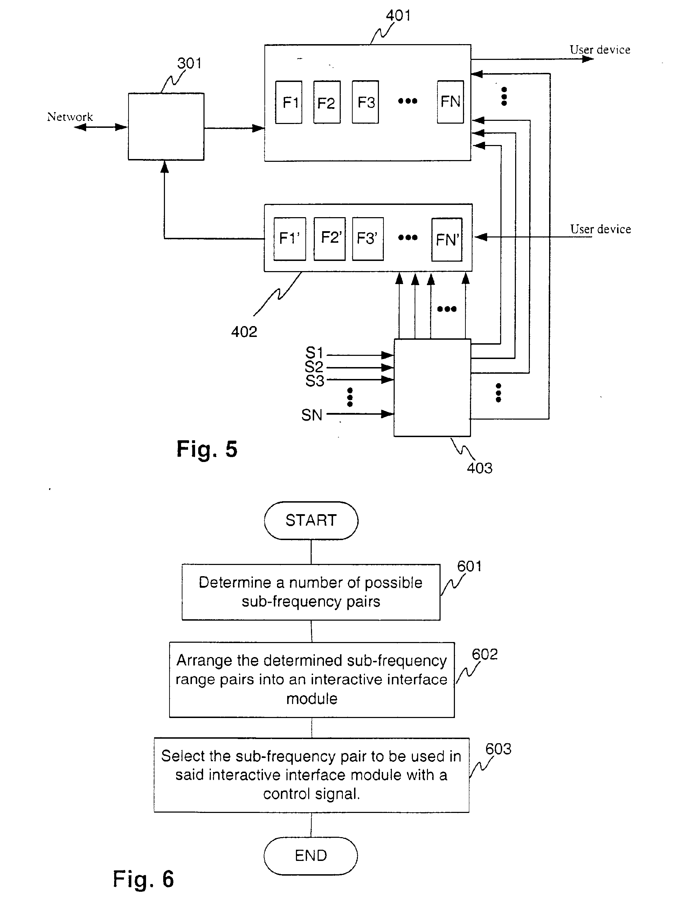

In Figure 5 it is shown a general arrangement of the invention in which it is possible to arrange as many sub-frequency ranges as it is needed to the upstream and the downstream channels. By sub-frequency range it is meant a frequency range, which covers at least a part of the frequency range reserved for the upstream or the downstream channel. The possible frequency ranges are arranged with filtering means 401, 402. Means 401 comprise filtering elements F1, F2, F3, ..., FN, which determine the used sub-frequency range in the downstream channel. In a similar way means 302 comprise filtering elements F1', F2', F3', ..., FN'. which determine the used sub-frequency range in the upstream path. The used filtering element in the upstream and downstream channels can be chosen with gap selectors S1, S2, S3. .... SN. In one preferred embodiment of the invention there are the same number of filtering elements in the upstream and the downstream channels. In another preferred embodiment of the invention the number of filtering elements in the upstream and downstream channels is not equal. In this case at least one filtering element either in the upstream channel or in the downstream channel can be chosen multiple times with different gap selectors. It is also possible to arrange different gap selectors for both the upstream and downstream channels. Advantageously, in such a case there is also arranged some sort of coordination between the selections to make sure that the frequency gap is wide enough between the used frequency ranges. The filtering elements F1, F2, F3, ..., FN, F1', F2', F3', ..., FN' can be implemented with electronics. Another advantageous solution is to implement the filtering elements with software and a microprocessor. In the most sophisticated embodiment of the invention the used sub-frequency ranges are determined dynamically into the filtering means 401, 402. The sub-frequency range is inputted to the filtering means for example with the gap selectors.

The arrangement described above is advantageously implemented to the interactive interface module. The new arrangement can be implemented to the diplex-filter so that the frequency ranges are arranged to the diplex-filter and control signals are used for selecting the needed frequency range.

The need for different frequency ranges in the upstream and downstream channels results from different requirements. It is possible that different service providers use different frequency ranges in transmission and it is advantageous that all the different frequency ranges can be reached with the same device. It is also possible that in different countries the used frequency ranges differ from each other and especially then it is very advantageous that the same device is usable in all countries.

A method according to the invention is shown in Figure 6. In the method for arranging frequency ranges in a forward interaction path and in a return interaction path in a digital video broadcasting system a number of possible sub-frequency range pairs are determined 601. With the determination it is meant a division of the frequency ranges of the forward and the return interaction paths determined in the specifications into a sub-frequency ranges. The sub-frequency ranges can overlap at least partly or they can be totally separated in one interaction path. The most important thing is that the frequency gap between a certain sub-frequency range in the forward interaction path and a corresponding sub-frequency range in the return interaction path is wide enough. Few possible examples of this kind of arrangements are shown in Tables 1 and 2. After the sub-frequency range pairs are determined the sub-frequency range pairs are arranged into an interactive interface module 602. The sub-frequency pair to be used in said interactive interface module is selected with a control signal 603.

To a person skilled in the art it is obvious that words upstream channel and return interaction path are synonyms to each other. As well, words downstream channel and forward interaction path can be used alternatively.

In view of the foregoing description it will be evident to a person skilled in the art that various modifications may be made within the scope of the invention. While a several preferred embodiments of the invention have been described in detail, it should be apparent that many modifications and variations thereto are possible, all of which fall within the true spirit and scope of the invention.

## Claims

1. An arrangement for selecting frequency ranges to be used in return and forward interaction paths in an interaction channel of a digital video broadcasting system, **characterized in that** the arrangement comprises at least
- first filtering means for filtering signals in the forward interaction path,
- second filtering means for filtering signals in the return interaction path,
- means for selecting sub-frequency ranges to be used in said forward interaction path and in said return interaction path from a number of predetermined sub-frequency ranges arranged into said first filtering means and into said second filtering means.

2. An arrangement according to claim 1, **characterized in that** the first filtering means comprise high-pass filtering elements.

3. An arrangement according to claim 1, **characterized in that** the second filtering means comprise low-pass filtering elements.

4. An arrangement according to claim 1, **characterized in that** the first and second filtering means both comprise at least two filtering elements.

5. An arrangement according to claim 4, **characterized in that** at least one filtering element in the first filtering means and at least one filtering element in the second filtering means are arranged to be selected at the same time.

6. An arrangement according to claim 5, **characterized in that** the arrangement comprises means for selecting at least one filtering element in the first filtering means and at least one filtering element in the second filtering means.

7. An arrangement according to claim 1, **characterized in that** the frequency ranges achieved by filtering the forward interaction path and the return interaction path are arranged to be separated with a predetermined frequency gap.

8. An arrangement according to claim 7, **characterized in that** the predetermined frequency gap is 20 MHz.

9. An arrangement according to claim 1, **characterized in that** it is implemented to an interactive interface module of a set-top box.

10. A method for arranging frequency ranges into a forward interaction path and into a return interaction path in a digital video broadcasting system, **characterized in that** the method comprises at least the following steps:
- a number of possible sub-frequency range pairs, comprising at least one frequency range for the forward interaction path and at least one frequency range for the return interaction path, are determined,
- said sub-frequency range pairs are arranged into an interactive interface module,
- the one of said frequency range pairs to be used in said interactive interface module is selected as a response to a control signal.

11. A method according to claim 10, **characterized in that** the sub-frequency ranges are overlapping in one interaction path.

12. A method according to claim 10, **characterized in that** the sub-frequency ranges are separate in one interaction path.
